(19) Europäisches Patentamt
European Patent Office
Office européen des brevets

(11) **EP 2 293 615 A1**

(12) **EUROPEAN PATENT APPLICATION**
published in accordance with Art. 153(4) EPC

(43) Date of publication:
**09.03.2011 Bulletin 2011/10**

(51) Int Cl.:
*H04W 16/26* (2009.01)      *H04B 7/155* (2006.01)
*H04W 88/06* (2009.01)      *H04W 88/10* (2009.01)

(21) Application number: **09762421.7**

(22) Date of filing: **04.06.2009**

(86) International application number:
**PCT/JP2009/060241**

(87) International publication number:
**WO 2009/150991 (17.12.2009 Gazette 2009/51)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **12.06.2008 JP 2008154466**

(71) Applicant: **Sharp Kabushiki Kaisha**
**Osaka-shi, Osaka 545-8522 (JP)**

(72) Inventors:
• **NAKAMURA, Osamu**
  **Osaka 545-8522 (JP)**

• **KUBOTA, Minoru**
  **Osaka 545-8522 (JP)**
• **HAMAGUCHI, Yasuhiro**
  **Osaka 545-8522 (JP)**
• **TO, Shimpei**
  **Osaka 545-8522 (JP)**
• **YOKOMAKURA, Kazunari**
  **Osaka 545-8522 (JP)**

(74) Representative: **Müller - Hoffmann & Partner**
**Patentanwälte**
**Innere Wiener Strasse 17**
**81667 München (DE)**

(54) **RELAY DEVICE, COMMUNICATION SYSTEM, AND RELAY METHOD**

(57)     It is aimed to expand a coverage area of a transmission apparatus by relay, while improving spectral efficiency (cell throughput). A relay apparatus for transmitting a signal received from a transmission apparatus to a reception apparatus has a received signal processing section 33 that demodulates a signal received from the transmission apparatus, a selecting section 34 that selects a transmission scheme enabling the reception apparatus to demodulate from among a plurality of transmission schemes, and signal generating sections 35a and 35b that generate a signal used in the transmission scheme selected by the selecting section 34 based on the signal demodulated by the received signal processing section 33.

*FIG.3*

EP 2 293 615 A1

**Description**

Technical Field

The present invention relates to a relay apparatus, communication system, and relay method for relaying radio communication between a transmission apparatus and reception apparatus.

Background Art

Conventionally, in the next-generation mobile communication, high speed data transmission has been demanded, and to perform high speed data transmission, a wider frequency band is required. However, when transmission is performed in a wider band, since the time interval for sampling a received signal becomes short, the multipath arriving at a receiver via different paths that could not be detected in the conventional technique is divided, and the effect cannot be neglected. In a multipath environment, the effect of frequency selective fading, where the spectrum of a received signal is distorted when the signal is observed in the frequency domain, is significant.

As a result, when conventional single-carrier transmission that has been used in the second-generation cellular telephone and the like is applied to a wider band and signals are transmitted, the signals are largely distorted, and therefore, transmission characteristics significantly deteriorate. To cope with deterioration, adaptive equalization techniques for restoring distortion of the signal to an original state have existed, but the adaptive equalization techniques at that time increase the computation amount exponentially with respect to the number of multiple paths as the number of multiple paths increases, and therefore, have not become applicable to small-size cellular telephones that can be reception apparatuses.

Then, in W-CDMA (Wideband Code Division Multiple Access) that is the third-generation cellular telephone system, correlation is calculated using spreading codes excellent in auto-correlation characteristics and cross-correlation characteristics to divide multiple paths into each path, the path diversity effect is obtained by rake combining for combining energy, and it is thereby possible to obtain excellent transmission characteristics also in a frequency selective fading environment. As a result, the CDMA techniques have become widespread.

However, when the number of paths in the reception apparatus is too high with a further widened band, the correlation value is not zero even in excellent auto-correlation characteristics and cross-correlation characteristics, and residual interference of many other paths is accumulated in a path to detect. As a result, transmission characteristics seriously deteriorate by inter-path interference. Therefore, attention is directed toward multicarrier transmission such as Orthogonal Frequency Division Multiplexing (OFDM) for performing high-capacity transmission in parallel in the frequency domain using many narrowband subcarriers arranged at orthogonal frequency intervals and Multi-Carrier CDMA (MC-CDMA).

In multicarrier transmission, since periodicity of an OFDM symbol can be maintained by adding a waveform of the latter half of the OFDM symbol duration to the front as a guard interval (GI), the effect of multipath does not exist in each subcarrier even in a frequency selective fading environment while maintaining orthogonality among subcarriers, and it is possible to perform signal processing that is not dependent on the number of paths. Therefore, OFDM is used in terrestrial digital broadcasting, wireless LAN (Local Area Network), etc.

Meanwhile, in uplink (transmission from a mobile station to a base station) in mobile communication, from the problem with linearity in an amplifier in a mobile terminal, it is difficult to use OFDM transmission with high PAPR (Peak to Average Power Ratio), and it is desired to use signal-carrier transmission. Therefore, the GI is added to single-carrier transmission using the same idea as in OFDM, equalization is performed to compensate for distortion of a signal by a single time of multiplication in the frequency domain, and it is thereby possible to obtain the frequency diversity effect while suppressing inter-path interference. Further, it is determined that LTE (Long Term Evolution) adopts SC-FDMA (Single Carrier Frequency Division Multiple Access) where the entire system band is divided into sub-channels each comprised of a plurality of subcarriers to assign each user, and the spectrum can be flexibly assigned to any sub-channel. Further, Dynamic Spectrum Control (DSC) is also proposed where in allocating the frequency spectrum, a discrete spectrum is allocated to frequencies with good channel conditions.

Further, since frequencies with a wideband are used in the next-generation mobile communication, it is presumed that the carrier frequencies are high. When the carrier frequencies are high, since the progressive property of a radio signal is strong, the radio signal does not arrive at inside a building or shadow of a building, and the coverage area is reduced. Therefore, unless many base stations are built, it is difficult to accommodate terminals to achieve conventional seamless connection.

Therefore, it is proposed installing a relay station in between a base station apparatus and a mobile station apparatus. By installing the relay station, the information can be transmitted to an area at which a radio signal from the base station does not arrive by means of the relay, and it is thereby possible to expand the area covered by the base station, and to suppress increases in the number of installed base stations. Further, concurrently therewith, since the transmission station does not need to communicate with the reception station at a considerable distance, there is a merit that transmission power can be reduced.

For example, Patent Document 1 discloses a relay station adopting a configuration as shown in FIG. 15. This relay station 1500 estimates channel transfer functions of both of a channel (first channel A) between a base station (transmission station) 1501 and the relay station 1500 and another channel (second channel B) between the relay station 1500 and a mobile station (reception station) 1502, and rearranges subcarriers for each OFDM packet so that optimal combination arises between subcarriers of the first and second channels, and great gain is thereby achieved as compared with the conventionally OFDM relay.

Prior Art Document

Patent Document

Patent Document 1: Japanese Unexamined Patent Publication No. 2007-043690

Disclosure of Invention

Problems to be Solved by the Invention

The recent development of mobile communication is remarkable, and still at present, in the market exists a mixture of cellular telephones of the 2nd-generation (2G) such as PDC (Personal Digital Cellar) and GSM (Global System for Mobile Communication), the 3rd-generation (3G) such as W-CDMA and CDMA 2000 1x, and the 3.5-generation (3.5G) such as HSDPA (High Speed Downlink Packet Access) and CDMA 2000 1x EV-DO (Evolution Data Only). It can be considered that in the future cellular telephones of the 3. 9-generation (3.9G) such as LTE (Long Term Evolution) and the 4th-generation (4G) will further be put into widespread use in the market.

However, since the time and cost are required to replace the infrastructure of base stations and the like with that supports up to 3. 9G and 4G, in not only cellular terminals but also base stations, it can be considered that various generations of base stations coexist. Further, in newly installing base stations for 3.9G, it requires the cost constructing the base stations to still support 2G in consideration of the aforementioned fact.

Moreover, since spectral efficiency is more excellent in new-generation mobile communication systems of 3.9G and 4G than in 3G, it is better performing communications using the new-generation communication system as much as possible, but in communications between the base station and mobile station, communications cannot be performed when either of the base station and mobile station does not support the new-generation communication system. Further, for example, when the mobile station supports only 3G while the relay station and the base station support up to 3.5G and 3.9G as well as 3G, it is better using 3. 9G with the highest spectral efficiency among supported transmission systems in communications between the relay station and the base station, but in the current concept, since transmission is performed in the 3G transmission system, spectral efficiency reduces.

The present invention was made in view of such circumstances, and it is an obj ect to provide a relay apparatus, communication system and relay method for expanding a coverage area of a transmission apparatus by relay, while enabling spectral efficiency (cell throughput) to be improved.

Means for Solving the Problem

(1) To attain the above-mentioned object, the invention took measures as described below. In other words, a relay apparatus of the invention is a relay apparatus for transmitting a signal received from a transmission apparatus to a reception apparatus, and is characterized by having a received signal processing section that demodulates a signal received from the transmission apparatus, a selecting section that selects a transmission scheme enabling the reception apparatus to demodulate from among a plurality of transmission schemes, and a signal generating section that generates a signal used in the transmission scheme selected by the selecting section based on the signal demodulated by the received signal processing section.

Thus, a transmission scheme enabling the reception apparatus to demodulate is selected from among a plurality of transmission schemes, a signal used in the selected transmission scheme is generated based on the demodulated signal, and therefore, even when supported transmission schemes are different between the transmission apparatus and the reception apparatus, it is possible to perform communications. Further, the transmission apparatus is capable of performing transmission using a transmission scheme with higher spectral efficiency without considering performance of the reception apparatus, while the reception apparatus is capable of receiving a signal from the relay apparatus without considering performance of the transmission apparatus. As a result, it is possible to expand the coverage area by relay, and to also improve spectral efficiency (cell throughput).

3

(2) Further, in the relay apparatus of the invention, the selecting section is characterized by selecting a transmission scheme with the highest spectral efficiency from among a plurality of transmission schemes enabling the reception apparatus to demodulate.

Thus, the selecting section selects a transmission scheme with the highest spectral efficiency from among a plurality of transmission schemes enabling the reception apparatus to demodulate, and it is thereby possible to enhance spectral efficiency of the entire system. For example, when the transmission apparatus supports only 3G while the reception apparatus supports 3.9G, the relay apparatus demodulates a signal transmitted from the transmission apparatus in the 3G transmission scheme, and is capable of transmitting a signal to the reception apparatus in the 3.9G transmission scheme.

(3) Furthermore, in the relay apparatus of the invention, it is a feature that the received signal processing section demodulates a single-carrier signal transmitted using consecutive frequencies from the transmission apparatus, and that the signal generating section generates a transmission signal such that the frequency spectrum of a single carrier is assigned to arbitrary frequencies capable of being allocated.

Thus, a single-carrier signal transmitted using consecutive frequencies from the transmission apparatus is demodulated, a transmission signal is generated such that the frequency spectrum of a single carrier is assigned to arbitrary frequencies capable of being allocated, and it is thereby possible to perform communications with excellent PAPR (Peak to Average Power Ratio) characteristics.

(4) Still furthermore, in the relay apparatus of the invention, the signal generating section is characterized by having a plurality of transmission signal generating sections respectively associated with the plurality of transmission schemes.

Thus, the relay apparatus is provided with a plurality of transmission signal generating sections respectively associated with the plurality of transmission schemes, thereby selects a transmission scheme enabling the reception apparatus to demodulate from among the plurality of transmission schemes, and is capable of generating a signal used in the separately selected transmission scheme based on the demodulated signal.

(5) Further, a communication system of the invention is a communication system in which a base station apparatus and a mobile station apparatus perform radio communication via a relay apparatus, and is characterized in that either one of the base station apparatus and the mobile station apparatus as a transmission apparatus transmits a signal to the relay apparatus, the relay apparatus demodulates the signal received from either one of the base station apparatus and the mobile station apparatus as a transmission apparatus, selects a transmission scheme enabling the other one of the base station apparatus and the mobile station apparatus as a reception apparatus to demodulate from among a plurality of transmission schemes, generates a signal used in the selected transmission scheme based on the demodulated signal, and transmits the generated signal to the other one of the base station apparatus and the mobile station apparatus as a reception apparatus, and the other one of the base station apparatus and the mobile station apparatus as a reception apparatus receives the signal from the relay apparatus.

Thus, a transmission scheme enabling the reception apparatus to demodulate is selected from among a plurality of transmission schemes, a signal used in the selected transmission scheme is generated based on the demodulated signal, and therefore, even when supported transmission schemes are different between the transmission apparatus and the reception apparatus, it is possible to perform communications. Further, the transmission apparatus is capable of performing transmission using a transmission scheme with higher spectral efficiency without considering performance of the reception apparatus, while the reception apparatus is capable of receiving a signal from the relay apparatus without considering performance of the transmission apparatus. As a result, it is possible to expand the coverage area by relay, and to also improve spectral efficiency (cell throughput).

(6) Furthermore, the communication system of the invention is characterized by being comprised of a relay apparatus as described in any one of claims 1 to 4, a base station apparatus, and a mobile station apparatus, where the base station apparatus and the mobile station apparatus perform radio communication via the relay apparatus.

Thus, a transmission scheme enabling the reception apparatus to demodulate is selected from among a plurality of transmission schemes, a signal used in the selected transmission scheme is generated based on the demodulated signal, and therefore, even when supported transmission schemes are different between the transmission apparatus and the reception apparatus, it is possible to perform communications. Further, the transmission apparatus is capable of performing transmission using a transmission scheme with higher spectral efficiency without considering performance of the reception apparatus, while the reception apparatus is capable of receiving a signal from the relay apparatus without considering performance of the transmission apparatus. As a result, it is possible to expand the coverage area by relay, and to also improve spectral efficiency (cell throughput).

(7) Further, a relay method of the invention is a relay method of a relay apparatus for transmitting a signal received from a transmission apparatus to a reception apparatus, and is characterized by including at least the steps of receiving a signal from the transmission apparatus, demodulating the received signal, selecting a transmission scheme enabling the reception apparatus to demodulate from among a plurality of transmission schemes, generating a signal used in the selected transmission scheme based on the demodulated signal, and transmitting the generated signal to the reception apparatus.

Thus, a transmission scheme enabling the reception apparatus to demodulate is selected from among a plurality of transmission schemes, a signal used in the selected transmission scheme is generated based on the demodulated signal, and therefore, even when supported transmission schemes are different between the transmission apparatus and the reception apparatus, it is possible to perform communications. Further, the transmission apparatus is capable of performing transmission using a transmission scheme with higher spectral efficiency without considering performance of the reception apparatus, while the reception apparatus is capable of receiving a signal from the relay apparatus without considering performance of the transmission apparatus. As a result, it is possible to expand the coverage area by relay, and to also improve spectral efficiency (cell throughput).

Advantageous Effect of the Invention

According to the invention, a transmission scheme enabling the reception apparatus to demodulate is selected from among a plurality of transmission schemes, a signal used in the selected transmission scheme is generated based on the demodulated signal, and therefore, even when supported transmission schemes are different between the transmission apparatus and the reception apparatus, it is possible to perform communications. Further,the transmission apparatus is capable of performing transmission using a transmission scheme with higher spectral efficiency without considering performance of the reception apparatus, while the reception apparatus is capable of receiving a signal from the relay apparatus without considering performance of the transmission apparatus. As a result, it is possible to expand the coverage area by relay, and to also improve spectral efficiency (cell throughput).

Brief Description of Drawings

FIG. 1 is a diagram illustrating a schematic configuration of a communication system according to Embodiment 1;
FIG. 2 is a block diagram illustrating a schematic configuration of a transmission apparatus;
FIG. 3 is a block diagram illustrating a schematic configuration of a relay apparatus;
FIG. 4 is a block diagram illustrating a schematic configuration of a 3G received signal processing section;
FIG. 5 is a block diagram illustrating a schematic configuration of a 3.9G transmission signal generating section;
FIG. 6 is a diagram illustrating an example when a sub-channel with good channel conditions is allocated among 6 sub-channels;
FIG. 7 is a block diagram illustrating a schematic configuration of a reception apparatus;
FIG. 8 is a block diagram illustrating a schematic configuration of a 3.9G received signal processing section;
FIG. 9 is a block diagram illustrating a schematic configuration of a transmission apparatus;
FIG. 10 is a block diagram illustrating a schematic configuration of a relay apparatus;
FIG. 11 is a block diagram illustrating a schematic configuration of a DSC transmission signal generating section;
FIG. 12 is a diagram illustrating an example when a sub-channel with good channel conditions is allocated among 6 sub-channels;
FIG. 13 is a block diagram illustrating a schematic configuration of a reception apparatus;
FIG. 14 is a block diagram illustrating a schematic configuration of a DSC received signal processing section in the reception apparatus; and

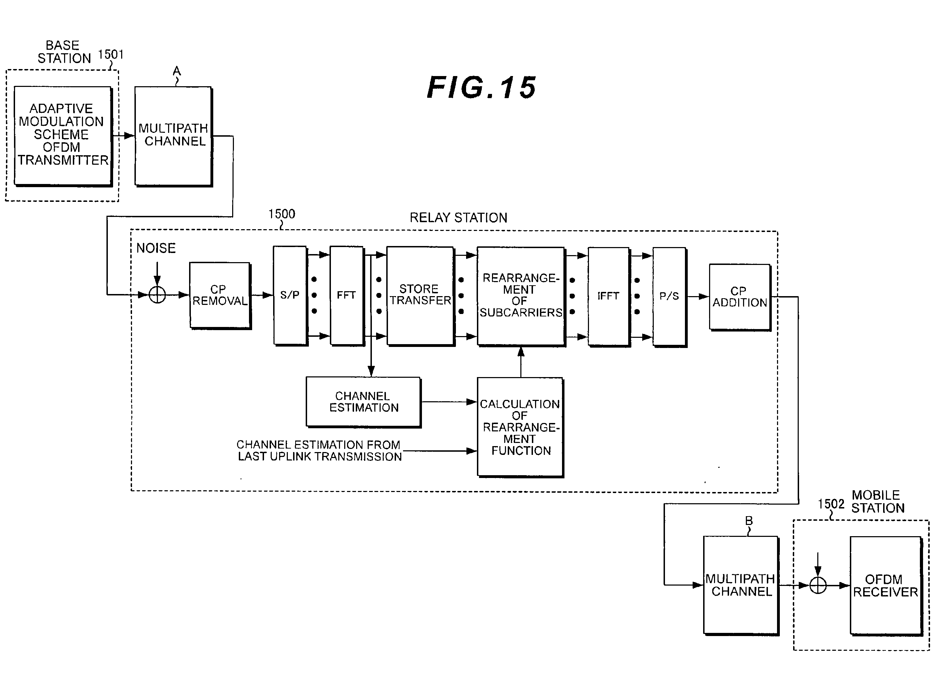

FIG. 15 is a diagram illustrating a schematic configuration of a relay station.

Best Mode for Carrying Out the Invention

(Embodiment 1)

Embodiment 1 describes a relay apparatus and relaymethod applied to a communication system comprised of a transmission apparatus (mobile station) that supports only 3G and a reception apparatus (base station apparatus) that supports 3G and 3.9G.

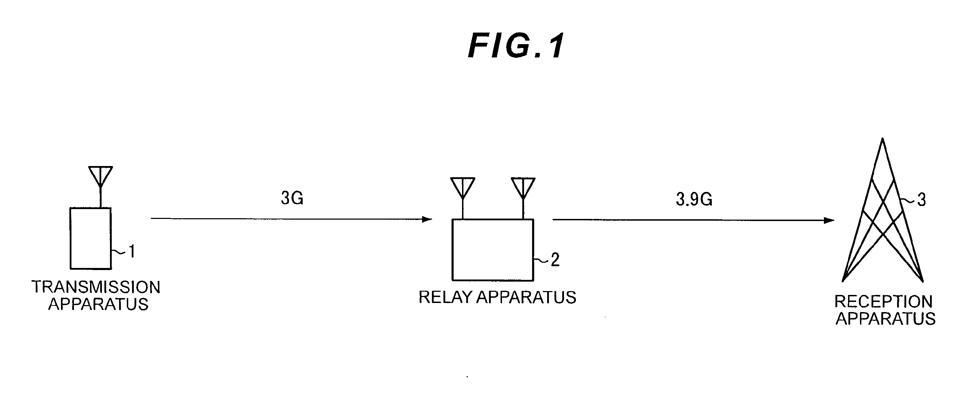

FIG. 1 is a diagram illustrating a schematic configuration of the communication system according to Embodiment 1. First, before performing data communication, a transmission apparatus 1 notifies a relay apparatus 2 of transmitting a signal in a 3G transmission scheme. Further, a reception apparatus 3 also beforehand notifies the relay apparatus 2 that the apparatus 3 is capable of performing demodulation in 3G and 3.9G. The transmission apparatus 1 notifies the relay apparatus 2 of transmitting a signal in the 3G transmission scheme, and therefore, as shown in FIG. 1, transmits a signal to the relay apparatus 2 in the 3G transmission scheme. The relay apparatus 2 receives the signal from the transmission apparatus 1, and decodes the received signal to be a convertible signal. Subsequently, the relay apparatus 2 selects a 3.9G transmission scheme with the highest spectral efficiency among transmission schemes that both of the reception apparatus 3 and relay apparatus 2 can support, and transmits the signal to the reception apparatus 3.

Herein, this Embodiment shows the case that the relay apparatus 2 relays an uplink signal, but the invention is not limited thereto, and the same technique is capable of being performed in downlink.

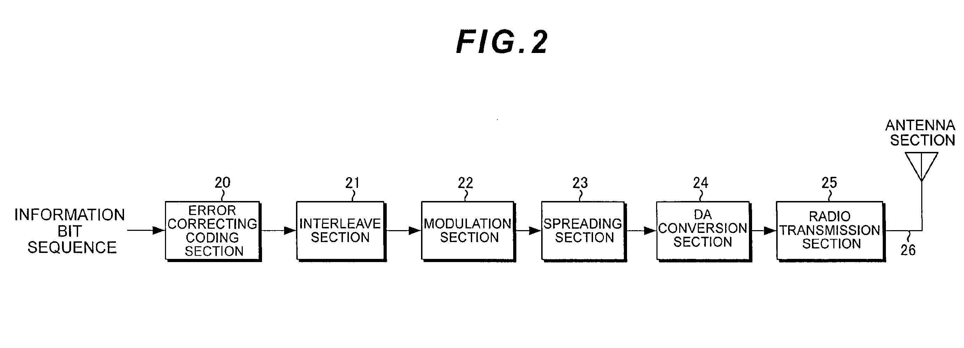

The transmission apparatus will be described next. FIG. 2 is a block diagram illustrating a schematic configuration of the transmission apparatus. An error correcting coding section 20 performs error correcting coding of convolutional code, turbo code and the like on an input information bit sequence, and inputs the obtained coded bit sequence to an interleave section 21. The interleave section 21 rearranges an arrangement of coded bits to randomize the effect of distortion caused by channels to output to a modulation section 22. The modulation section 22 generates modulated symbols of QPSK (Quadrature Phase Shift Keying), 16QAM (Quadrature Amplitude Modulation) or the like to output to a spreading section 23.

The spreading section 23 spreads the modulated symbols using a spreading code such as PN (Pseudo Noise) code, and generates a spread chip sequence to output to a DA (Digital to Analog) conversion section 24. The DA conversion section 24 converts the digital signal into an analog signal, and a radio transmission section 25 performs band limitation filtering processing and up-conversion, and transmits the signal using an antenna section 26.

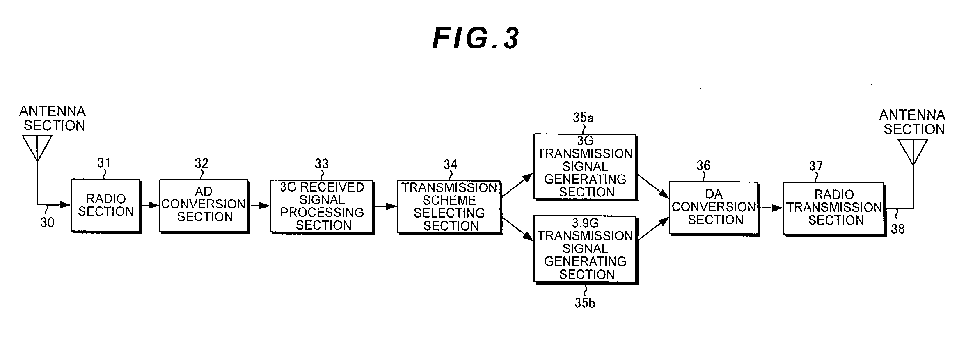

FIG. 3 is a block diagram illustrating a configuration of the relay apparatus. A signal received via an antenna section 30 is subjected to processing for down-conversion, filtering and the like in a radio section 31, then subjected to AD conversion in an AD conversion section 32, and is output to a 3G received signal processing section 33.

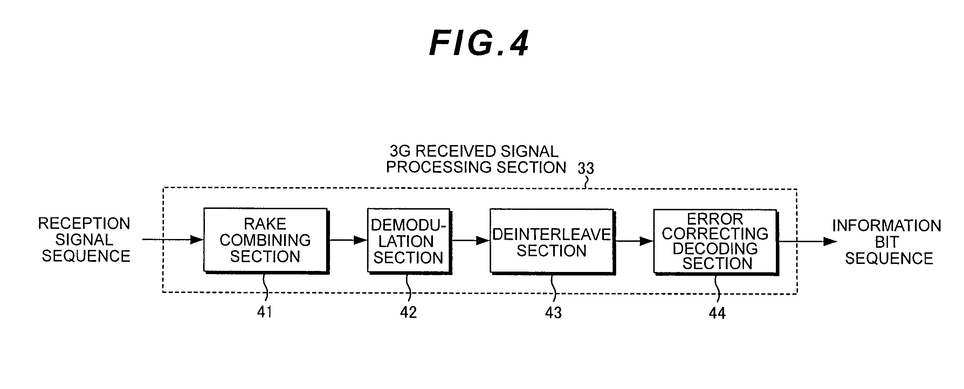

The 3G received signal processing section 33 adopts the configuration as shown in FIG. 4. In other words, the signal input to the 3G received signal processing section 33 is input to a rake combining section 41. The rake combining section 41 calculates correlation of the signal received via different paths with the spreading code used in the transmission apparatus 1 to divide the paths, performs combining, and then, outputs the resultant to a demodulation section 42. The demodulation section 42 calculates Log Likelihood Ratio (LLR) from the signal input from the rake combining section 41 based on modulation performed in the transmission apparatus 1 to output to a deinterleave section 43.

The deinterleave section 43 performs deinterleaving corresponding to interleaving performed in the transmission apparatus 1, thereby restores the arrangement of LLR of coded bits to the original arrangement, and outputs the resultant to an error correcting decoding section 44. The error correcting decoding section 44 performs error correcting decoding processing corresponding to coding performed in the transmission apparatus 1, and outputs an obtained bit sequence.

In addition, this Embodiment shows the case of using rake combining, but it is possible to use any technique for compensating for the effect of multipath such as maximum likelihood estimation and frequency region equalization.

Next, in FIG. 3, an output of the 3G received signal processing section 33 is input to a transmission scheme selecting section 34. The transmission scheme selecting section 34 selects a transmission scheme with the highest spectral efficiency from among transmission schemes enabling the reception apparatus 3 to demodulate. In addition, as described above, the transmission schemes enabling the reception apparatus 3 to demodulate are beforehand notified from the reception apparatus 3. For example, when the reception apparatus 3 is capable of performing demodulation in the 3G and 3.9G transmission schemes, the transmission scheme selecting section 34 outputs the input signal to a 3. 9G transmission signal generating section 35b. Meanwhile, when the reception apparatus 3 supports only 3G, the section 34 outputs the input signal to a 3G transmission signal generating section 35a. Hereinafter, this Embodiment describes a case where the 3. 9G transmission signal generating section 35b is selected.

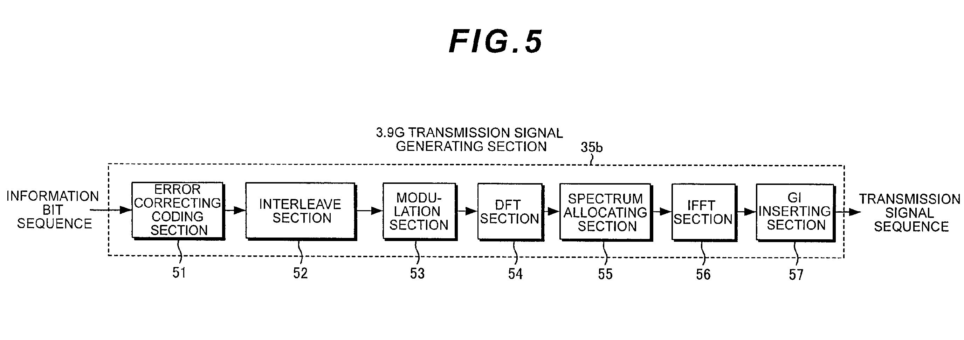

The bit sequence output from the transmission scheme selecting section 34 is input to the 3. 9G transmission signal generating section 35b. FIG. 5 is a block diagram illustrating a schematic configuration of the 3.9G transmission signal generating section. An error correcting coding section 51 performs error correcting coding of convolutional code, turbo code, LDPC (Low Density Parity Check) code or the like, and outputs the obtained coded bit sequence to an interleave section 52. The interleave section 52 applies bit interleaving, rearranges the coded bits, and outputs the resultant to a modulation section 53. The modulation section 53 generates modulated symbols of QPSK, 16QAM or the like from the coded bits to output to a DFT section 54. In addition, a modulation scheme performed in the modulation section 53 may be a different modulation scheme from that in the transmission apparatus 1.

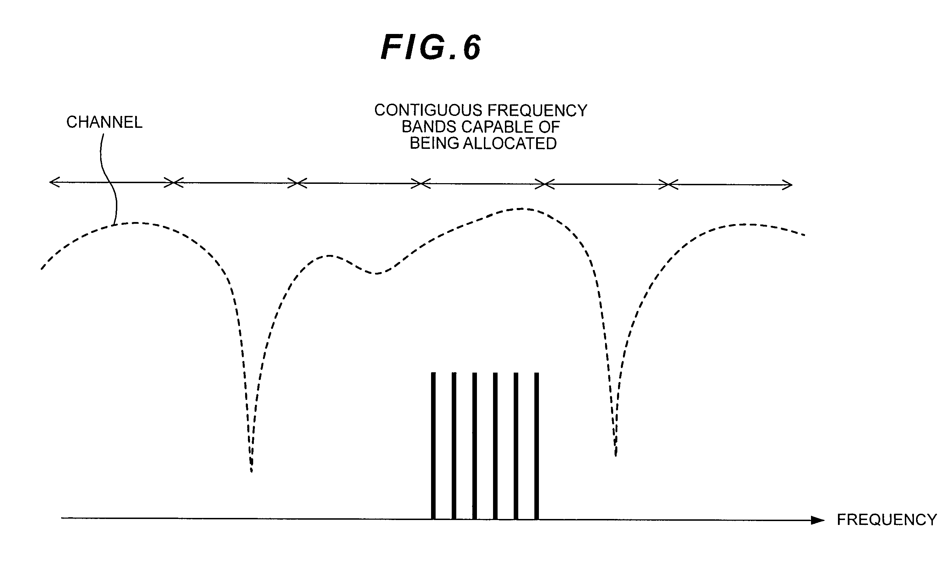

The DFT section 54 applies DFT (Discrete Fourier Transform) to $N_{DFT}$ modulated symbols to transform into frequency signals. The obtained $N_{DFT}$ frequency spectra are output to a spectrum allocating section 55. The spectrum allocating section 55 allocates each of the input $N_{DFT}$ frequency spectra to any of $N_{FFT}/N_{DFT}$ contiguous frequency bands (sub-channels) using the allocation information from the base station. Then, the section 55 inserts "0" in a frequency band with no allocation to output to an $N_{FFT}$-point IFFT section 56. For example, FIG. 6 shows an example when the fourth sub-channel with good channel conditions is allocated among 6 sub-channels. As channel quality C(i) of the ith sub-channel, for example, as shown in the following Equation, any quality may be used such as the sum of power of channels included in each sub-channel and quality in consideration of other interference.

[Eq.1]

$$C(i) = \sum_{k \in N_{seg}(i)} \left| H(k) \right|^2$$

where H (k) is complex channel gain of the kth frequency, and Nseg (i) is a frequency group constituting the ith sub-channel.

The IFFT section 56 applies $N_{FFT}$-point IFFT (Inverse Fast Fourier Transform) to transform into signals in the time domain, and outputs the signals. The output of the IFFT section 56 is input to a GI inserting section 57, and the section 57 performs GI insertion processing for adding $N_{Gi}$-point samples at the back of $N_{FFT}$ signals to the front of the $N_{FFT}$ signals, and outputs a signal sequence of $N_{FFT}+F_{GI}$ signals.

In FIG. 3, an output of the 3.9G transmission signal generating section 35b is input to a DA conversion section 36. The DA conversion section 36 converts the digital signal into an analog signal, and a radio transmission section 37 performs filtering processing and up-conversion, and transmits the signal using an antenna section 38.

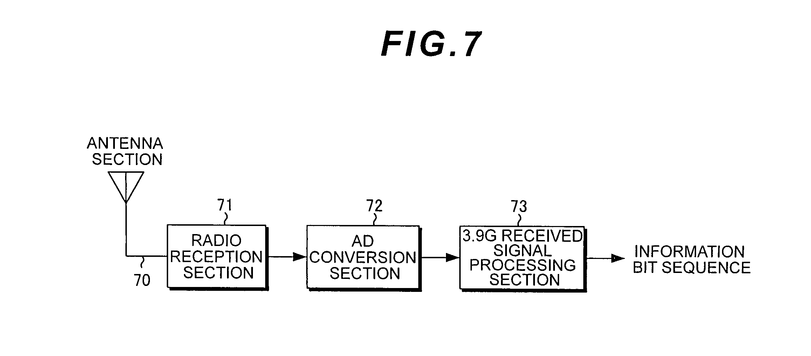

FIG. 7 is a block diagram illustrating a schematic configuration of the reception apparatus. The reception apparatus receives a signal via an antenna section 70. The received signal is subjected to processing for down-conversion, filtering, etc. in a radio reception section 71, then converted into a digital signal in an AD conversion section 72, and input to a 3.9G received signal processing section 73.

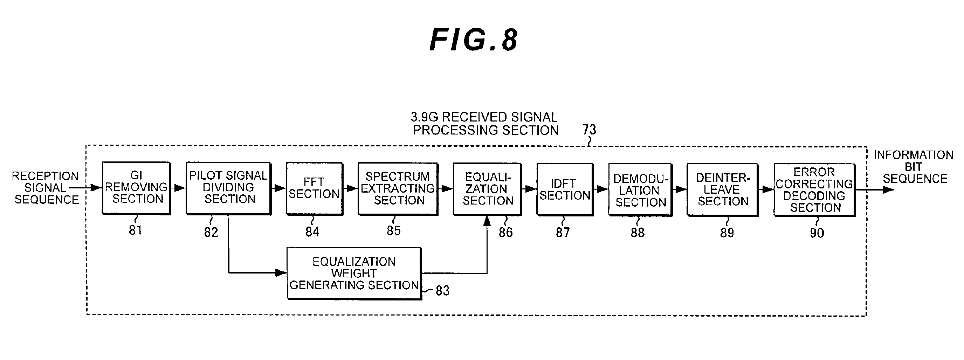

FIG. 8 is a block diagram illustrating a schematic configuration of the 3. 9G received signal processing section. The signal input to the 3. 9G received signal processing section 73 is input to a GI removing section 81. The GI removing section 81 removes the GI of $N_{GI}$ points inserted on the transmission side, and outputs the GI-removed signal to a pilot signal dividing section 82. The pilot signal dividing section 82 divides the signal into a pilot signal and reception signal (reception data signal). The pilot signal dividing section 82 outputs the pilot signal to an equalization weight generating section 83, and further outputs the reception signal (reception data signal) with the pilot signal removed to an FFT section 84.

Using the input reception pilot signal, the equalization weight generating section 83 generates an equalization weight such as an MMSE (MinimumMean Square Error) weight and ZF (Zero Forcing) weight to output to an equalization section 86. Meanwhile, the reception signal input to the FFT section 84 is subjected to $N_{FFT}$-point FFT, transformed into signals in the frequency domain, and then output to a spectrum extracting section 85. Based on the allocation information of the spectrum allocating section on the transmission side, the spectrum extracting section 85 selects and extracts $N_{DFT}$ spectra to output to the equalization section 86 as the reception signal. The equalization section 86 multiplies the signal in the frequency domain output from the FFT section 84 by the equalization weight input from the equalization weight generating section 83, thereby performs equalization processing, and outputs the resultant to an IDFT section 87.

The signal input to the IDFT section 87 is subjected to IDFT and output to a demodulation section 88. Based on modulation performed in the transmission apparatus, the demodulation section 88 calculates LLR to output to a deinterleave section 89. The deinterleave section 89 restores LLR to the same arrangement as that of coded bits in the transmission apparatus by deinterleaving corresponding to bit interleaving performed in the transmission apparatus, and outputs the resultant to an error correcting decoding section 90. The error correcting decoding section 90 performs error correcting decoding processing corresponding to coding performed in the transmission apparatus, and outputs an obtained bit sequence. In addition, an input to the error correcting decoding section 90 is LLR, but the invention is not limited thereto, and it is possible to perform decoding without using LLR.

Thus, even when the transmission apparatus 1 supports only 3G, the relay apparatus 2 is capable of demodulating a signal transmitted from the transmission apparatus 1 and transmitting the signal to the reception apparatus 3 in the 3. 9G transmission scheme, and it is thereby possible to enhance spectral efficiency of the entire system.

In addition, Embodiment 1 shows the case where the relay apparatus 2 once decodes the data from the transmission apparatus 1 to re-generate as described later, but there is not any problem when the signal is transmitted according to the 3. 9G transmission scheme, and therefore, a received signal with channels compensated may be converted into a waveform of 3.9G. Further, the processing is essentially the same as the processing for converting the data to a different-generation transmission scheme e.g. from 2G to 3G and from 3G to 4G. Further, DFT and FFT are used separately in time-frequency transform and in frequency-time transform. This is because of distinguishing transform of time and frequency signals of the original signal from transform of time and frequency signals after allocating the spectrum, both transforms are the same in the mathematical results, and therefore, it is possible to perform only FFT or only DFT, or DFT and FFT in inverse order to that in this Embodiment.

(Embodiment 2)

Embodiment 2 describes a relay apparatus and relaymethod applied to a communication system comprised of a transmission apparatus (mobile station) that supports only 3.9G, and a reception apparatus (base station apparatus) that supports 4G using Dynamic Spectrum Control (DSC).

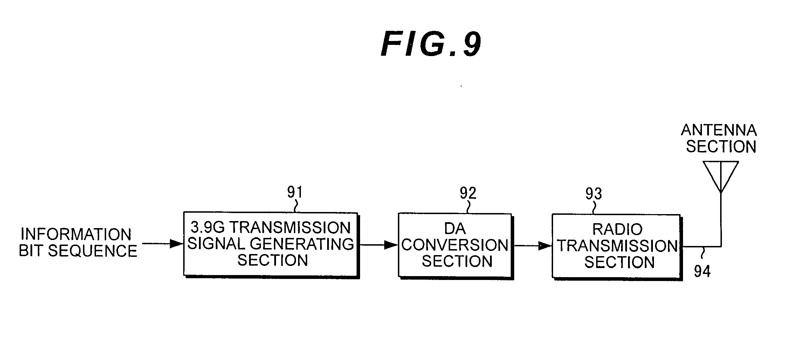

FIG. 9 is a block diagram illustrating a schematic configuration of the transmission apparatus. First, before performing data communication, the transmission apparatus notifies a relay apparatus of transmitting a signal of 3.9G. Further, a reception apparatus also beforehand notifies the relay apparatus that the reception apparatus is capable of performing demodulation in DSC. In FIG. 9, an information bit sequence is input to a 3. 9G transmission signal generating section 91. The 3.9G transmission signal generating section 91 has the same configuration as in Embodiment 1 described using FIG. 5. A signal sequence output from the 3.9G transmission signal generating section 91 is input to a DA conversion section 92. The DA conversion section 92 converts the digital signal into an analog signal . A radio transmission section 93 performs band limitation filtering processing and up-conversion, and transmits the signal using an antenna section 94.

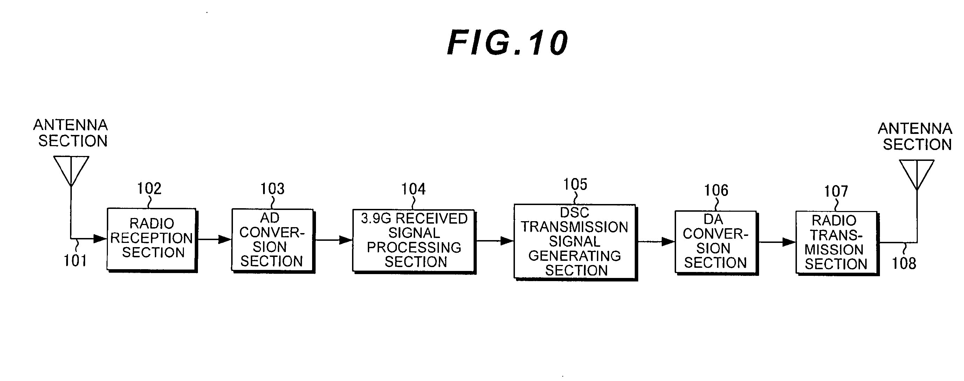

FIG. 10 is a block diagram illustrating a schematic configuration of the relay apparatus. A signal received via an antenna section 101 is subjected to processing for down-conversion, filtering, etc. in a radio reception section 102, then converted into a digital signal in an AD conversion section 103, and output to a 3.9G received signal processing section 104. The 3.9G received signal processing section 104 in the relay apparatus has the same configuration as in Embodiment 1 described using FIG. 8, and descriptions thereof are omitted. A bit sequence output from the 3.9G received signal processing section 104 is input to a DSC transmission signal generating section 105.

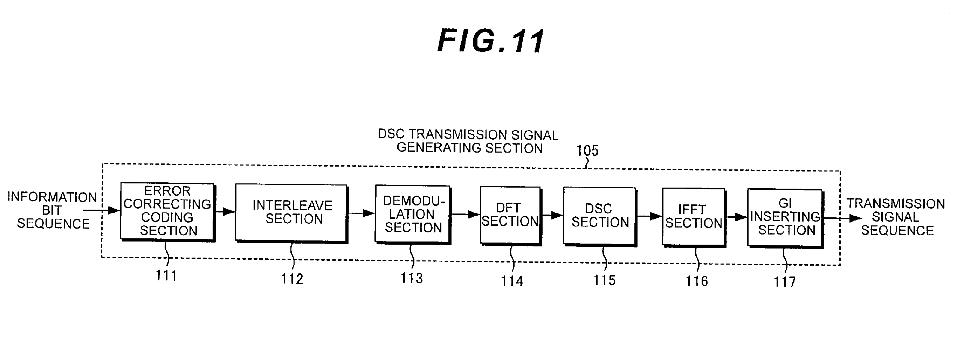

FIG. 11 is a block diagram illustrating a schematic configuration of the DSC transmission signal generating section. In FIG. 11, an error correcting coding section 111 performs error correcting coding of turbo code, LDPC code or the like on an input information bit sequence, and inputs the obtained coded bit sequence to an interleave section 112. The interleave section 112 rearranges the sequence to randomize the effect of distortion caused by channels to output to a modulation section 113. The modulation section 113 generates modulated symbols of QPSK, 16QAM or the like to output to a DFT section 114. In addition, as a modulation scheme performed in the modulation section 113, another modulation scheme different from that in the transmission apparatus may be used.

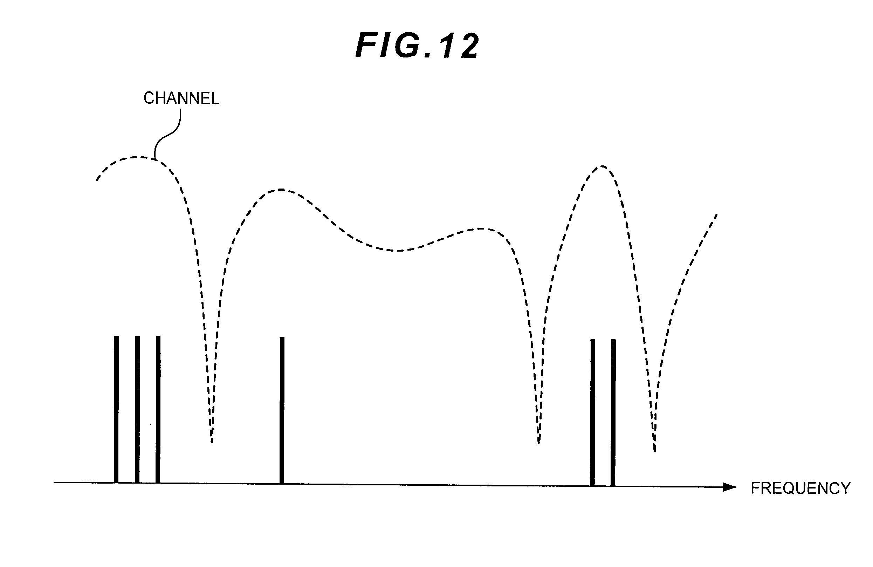

The DFT section 114 applies DFT to $N_{DFT}$ modulated symbols to transform into frequency signals, and outputs obtained $N_{DFT}$ frequency spectra to a DSC section 115. The DSC section 115 freely allocates each of the input $N_{DFT}$ frequency spectra to any of $N_{FFT}$ points on a discrete spectrum basis. FIG. 12 is a diagram illustrating an example of allocation. As shown in FIG. 12, for example, six spectra are allocated to arbitrary frequencies with good channel conditions. In other words, $(_{N_{FFT}}C_{N_{DFT}})$ combinations exist as an allocation pattern, and a single pattern is selected from the combinations. In addition, in normal DSC, $N_{FFT}$ discrete frequencies are selected in descending order of channel conditions in many cases.

At this point, "0" is inserted in a frequency with no allocation, and the resultant is input to an IFFT section 116. Further, when the DSC section 115 detects that another relay apparatus and/or transmission apparatus uses some frequency, the section 115 avoids the frequency, and allocates spectra to frequencies with good conditions. As in Embodiment 1, the criterion may be power of the channel, reception quality in consideration of other interference, or the like.

The IFFT section 116 applies $N_{FFT}$-point IFFT to frequency signals subjected to allocation obtained in the DSC section 115 to transform into signals in the time domain, and outputs the signals. The output of the IFFT section 116 is input to a GI inserting section 117, and the section 117 performs processing for adding $N_{GI}$ signals at the back of $N_{FFT}$ signals to the front of the $N_{FFT}$ signals, and outputs a signal sequence of $N_{FFT}+N_{GI}$ signals.

In FIG. 10, an output of the DSC transmission signal generating section 105 is input to a DA conversion section 106, the DA conversion section 106 converts the digital signal into an analog signal, and a radio transmission section 107 performs band limitation filtering processing and up-conversion, and transmits the signal using an antenna section 108.

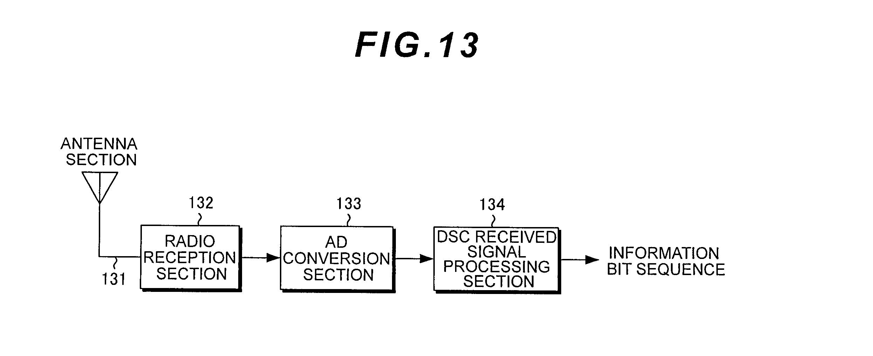

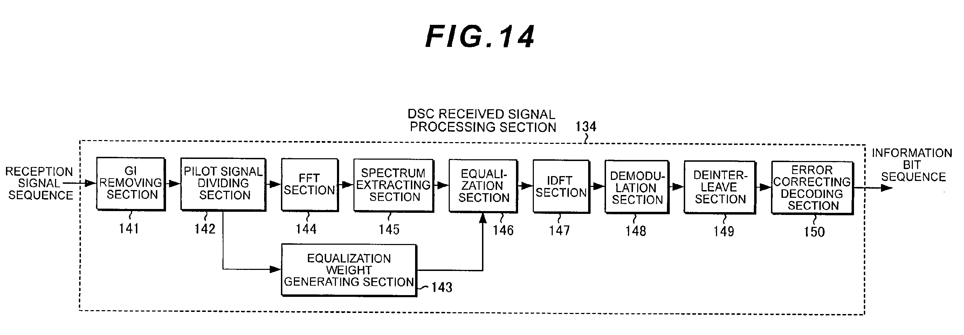

FIG. 13 is a block diagram illustrating a schematic configuration of the reception apparatus. A signal received via an antenna section 131 is subjected to processing for down-conversion, filtering, etc. in a radio reception section 132, then converted into a digital signal in an AD conversion section 133, and input to a DSC received signal processing section 134. FIG. 14 is a block diagram illustrating a schematic configuration of the DSC received signal processing section in the reception section. A signal input to the DSC received signal processing section 134 is input to a GI removing section 141. The GI removing section 141 removes the GI of $N_{GI}$ points inserted on the transmission side from the received signal, and outputs the GI-removed signal to a pilot signal dividing section 142.

The pilot signal dividing section 142 divides the signal into a pilot signal and reception signal (reception data signal). The pilot signal dividing section 142 outputs the pilot signal to an equalization weight generating section 143, and further outputs the reception signal (reception data signal) to an FFT section 144. The equalization weight generating section 143 estimates channel characteristics from the input pilot signal, and then generates an equalization weight such as an MMSE weight and ZF weight to output to an equalization section 146.

Meanwhile, the reception signal input to the FFT section 144 is subjected to $N_{FFT}$-point FFT, transformed into signals in the frequency domain, and output to a spectrum extracting section 145 . Based on allocation in the DSC section in the relay apparatus, the spectrum extracting section 145 selects and extracts spectra, and outputs the extracted $N_{DFT}$ spectra to the equalization section 146. The equalization section 146 multiplies the extracted frequency signal output from the FFT section 144 by the equalization weight input from the equalization weight generating section 143, thereby compensates for frequency variations in the channel, and outputs the resultant to an IDFT section 147.

The IDFT section 147 applies IDFT to the input frequency signal to transform into a time signal, and outputs the signal to a demodulation section 148. Based on the modulation scheme performed in the transmission apparatus, the demodulation section 148 calculates LLR to output to a deinterleave section 149. The deinterleave section 149 performs deinterleaving corresponding to interleaving performed in the transmission apparatus, and outputs the resultant to an error correcting decoding section 150. The error correcting decoding section 150 performs error correcting decoding processing corresponding to coding performed in the transmission apparatus, and outputs a decoded bit sequence.

Thus, even when the transmission apparatus supports only 3.9G, the relay apparatus decodes a signal transmitted from the transmission apparatus, performs DSC, and transmits the signal to the reception apparatus, and it is thereby possible to select frequencies with higher gain. Therefore, it is possible to improve the communication quality, while modulation with a higher modulation level can be used, and it is possible to enhance spectral efficiency of the entire system.

Asmentionedabove, as the Embodiments of the invention, described is relay for changing the transmission scheme between generations in the publicmobile communication system. The invention is not limited thereto, and is naturally applied to the case of adapting to a transmission scheme in private space in relaying data from the public mobile communication network and external network to the specific transmission scheme developed by a company or the like for its office, home network, etc. in the indoor private space. In other words, the invention is applicable when the data of the public mobile communication network is transformed into signals in an ISM (Industry-Science-Medical) band or the like that does not need a license.

Further, the above-mentioned description shows the relay apparatus used when transmission schemes are different between the transmission apparatus and reception apparatus, and for example, also in the case where the transmission apparatus is of non-MIMO and the reception apparatus is of MIMO or in the opposite case, the relay apparatus absorbs the difference and is capable of relaying communications between the transmission apparatus and reception apparatus. Description of Symbols

1    Transmission apparatus

2    Relay apparatus

3    Reception apparatus

20    Error correcting coding section

21    Interleave section

22    Modulation section

23    Spreading section

24    DA conversion section

25    Radio transmission section

26    Antenna section

30    Antenna section

31    Radio section

32    AD conversion section

33    3G received signal processing section

34    Transmission scheme selecting section

35a   3G transmission signal generating section

35b   3.9G transmission signal generating section

36    DA conversion section

37    Radio transmission section

38    Antenna section

41    Rake combining section

42    Demodulation section

43    Deinterleave section

44    Error correcting decoding section

51    Error correcting coding section

52    Interleave section

53    Modulation section

54    DFT section

55    Spectrum allocating section

56    IFFT section

57    GI inserting section

70    Antenna section

71    Radio reception section

72    AD conversion section

73    3.9G received signal processing section

81    GI removing section

82    Pilot signal dividing section

83    Equalization weight generating section

84    FFT section

85    Spectrum extracting section

86    Equalization section

87    IDFT section

88    Demodulation section

89   Deinterleave section

90   Error correcting decoding section

91   3.9G transmission signal generating section

92   DA conversion section

93   Radio transmission section

94   Antenna section

101   Antenna section

102   Radio reception section

103   AD conversion section

104   3.9G received signal processing section

105   DSC transmission signal generating section

106   DA conversion section

107   Radio transmission section

108   Antenna section

111   Error correcting coding section

112   Interleave section

113   Demodulation section

114   DFT section

115   DSC section

116   IFFT section

117   GI inserting section

131   Antenna section

132   Radio reception section

133   AD conversion section

134   DSC received signal processing section

141   GI removing section

142   Pilot signal dividing section

143   Equalization weight generating section

144   FFT section

145     Spectrum extracting section

146     Equalization section

147     IDFT section

148     Demodulation section

149     Deinterleave section

150     Error correcting decoding section

**Claims**

1.  A relay apparatus for transmitting a signal received from a transmission apparatus to a reception apparatus, comprising:

    a received signal processing section (33) that demodulates a signal received from the transmission apparatus;
    a selecting section (34) that selects a transmission scheme enabling the reception apparatus to demodulate from among a plurality of transmission schemes; and
    a signal generating section (35a,35b) that generates a signal used in the transmission scheme selected by the selecting section (34) based on the signal demodulated by the received signal processing section (33).

2.  The relay apparatus according to claim 1, wherein the selecting section (34) selects a transmission scheme with the highest spectral efficiency from among a plurality of transmission schemes enabling the reception apparatus to demodulate.

3.  The relay apparatus according to claim 1, wherein the received signal processing section (33) demodulates a single-carrier signal transmitted using consecutive frequencies from the transmission apparatus, and
    the signal generating section (35a,35b) generates a transmission signal such that a frequency spectrum of a single carrier is assigned to arbitrary frequencies capable of being allocated.

4.  The relay apparatus according to claim 1, wherein the signal generating section (35a,35b) has a plurality of transmission signal generating sections respectively associated with the plurality of transmission schemes.

5.  A communication system in which a base station apparatus and a mobile station apparatus perform radio communication via a relay apparatus (2),
    wherein one of the base station apparatus and the mobile station apparatus as a transmission apparatus (1) transmits a signal to the relay apparatus (2),
    the relay apparatus (2) demodulates the signal received from the one of the base station apparatus and the mobile station apparatus as a transmission apparatus (1), selects a transmission scheme enabling the other one of the base station apparatus and the mobile station apparatus as a reception apparatus (3) to demodulate from among a plurality of transmission schemes, generates a signal used in the selected transmission scheme based on the demodulated signal, and transmits the generated signal to the other one of the base station apparatus and the mobile station apparatus as a reception apparatus (3), and
    the other one of the base station apparatus and the mobile station apparatus as a reception apparatus (3) receives the signal from the relay apparatus (2).

6.  The communication system comprising:

    a relay apparatus (2) according to any one of claims 1 to 4;
    a base station apparatus (3); and
    a mobile station apparatus (1),
    wherein the base station apparatus (3) and the mobile station apparatus (1) perform radio communication via the relay apparatus (2).

7.  A relay method of a relay apparatus (2) for transmitting a signal received from a transmission apparatus (1) to a reception apparatus (3), including at least:

receiving a signal from the transmission apparatus (1);
demodulating the received signal;
selecting a transmission scheme enabling the reception apparatus (3) to demodulate from among a plurality of transmission schemes;
generating a signal used in the selected transmission scheme based on the demodulated signal; and
transmitting the generated signal to the reception apparatus (3).

# FIG.1

TRANSMISSION APPARATUS ~1

3G →

RELAY APPARATUS ~2

3.9G →

RECEPTION APPARATUS ~3

EP 2 293 615 A1

# FIG.2

ANTENNA
SECTION

INFORMATION
BIT
SEQUENCE →

| 20 | 21 | 22 | 23 | 24 | 25 |
|---|---|---|---|---|---|
| ERROR CORRECTING CODING SECTION | INTERLEAVE SECTION | MODULATION SECTION | SPREADING SECTION | DA CONVERSION SECTION | RADIO TRANSMISSION SECTION |

26

# FIG.3

EP 2 293 615 A1

# FIG.4

3G RECEIVED SIGNAL
PROCESSING SECTION  33

RECEPTION
SIGNAL
SEQUENCE
→
RAKE
COMBINING
SECTION
→
DEMODU-
LATION
SECTION
→
DEINTERLEAVE
SECTION
→
ERROR
CORRECTING
DECODING
SECTION
→
INFORMATION
BIT
SEQUENCE

41          42          43          44

## FIG.5

3.9G TRANSMISSION SIGNAL
GENERATING SECTION    35b

INFORMATION BIT SEQUENCE → ERROR CORRECTING CODING SECTION (51) → INTERLEAVE SECTION (52) → MODU-LATION SECTION (53) → DFT SECTION (54) → SPECTRUM ALLOCATING SECTION (55) → IFFT SECTION (56) → GI INSERTING SECTION (57) → TRANSMISSION SIGNAL SEQUENCE

# FIG.6

CHANNEL

CONTIGUOUS FREQUENCY
BANDS CAPABLE OF
BEING ALLOCATED

FREQUENCY

FIG.7

EP 2 293 615 A1

ANTENNA
SECTION

71
RADIO
RECEPTION
SECTION

70

72
AD
CONVERSION
SECTION

73
3.9G RECEIVED
SIGNAL
PROCESSING
SECTION

INFORMATION
BIT SEQUENCE

# FIG.8

3.9G RECEIVED SIGNAL
PROCESSING SECTION  73

RECEPTION
SIGNAL
SEQUENCE

| GI REMOVING SECTION 81 | PILOT SIGNAL DIVIDING SECTION 82 | FFT SECTION 84 | SPECTRUM EXTRACTING SECTION 85 | EQUALI-ZATION SECTION 86 | IDFT SECTION 87 | DEMODU-LATION SECTION 88 | DEINTER-LEAVE SECTION 89 | ERROR CORRECTING DECODING SECTION 90 |

INFORMATION
BIT
SEQUENCE

EQUALIZATION
WEIGHT
GENERATING SECTION ～83

EP 2 293 615 A1

# FIG.9

ANTENNA
SECTION

INFORMATION
BIT SEQUENCE →
3.9G TRANSMISSION
SIGNAL GENERATING
SECTION
91
→
DA
CONVERSION
SECTION
92
→
RADIO
TRANSMISSION
SECTION
93
94

# FIG.10

ANTENNA
SECTION

ANTENNA
SECTION

| 102 | 103 | 104 | 105 | 106 | 107 |
|---|---|---|---|---|---|
| RADIO RECEPTION SECTION | AD CONVER-SION SECTION | 3.9G RECEIVED SIGNAL PROCESSING SECTION | DSC TRANSMISSION SIGNAL GENERATING SECTION | DA CONVER-SION SECTION | RADIO TRANS-MISSION SECTION |

101

108

EP 2 293 615 A1

# FIG.11

DSC TRANSMISSION SIGNAL
GENERATING SECTION 105

INFORMATION
BIT
SEQUENCE

| ERROR CORRECTING CODING SECTION | INTERLEAVE SECTION | DEMODU-LATION SECTION | DFT SECTION | DSC SECTION | IFFT SECTION | GI INSERTING SECTION |
|---|---|---|---|---|---|---|
| 111 | 112 | 113 | 114 | 115 | 116 | 117 |

TRANSMISSION
SIGNAL
SEQUENCE

FIG.12

# FIG.13

ANTENNA
SECTION

132

133

134

RADIO
RECEPTION
SECTION

AD
CONVERSION
SECTION

DSC RECEIVED
SIGNAL
PROCESSING
SECTION

INFORMATION
BIT SEQUENCE

131

## FIG.14

DSC RECEIVED SIGNAL
PROCESSING SECTION    134

RECEPTION SIGNAL SEQUENCE →

| GI REMOVING SECTION | PILOT SIGNAL DIVIDING SECTION | FFT SECTION | SPECTRUM EXTRACTING SECTION | EQUALI-ZATION SECTION | IDFT SECTION | DEMODU-LATION SECTION | DEINTER-LEAVE SECTION | ERROR CORRECTING DECODING SECTION |

141    142    144    145    146    147    148    149    150

EQUALIZATION WEIGHT GENERATING SECTION ～143

→ INFORMATION BIT SEQUENCE

FIG.15

## INTERNATIONAL SEARCH REPORT

| | International application No. |
| | PCT/JP2009/060241 |

**A. CLASSIFICATION OF SUBJECT MATTER**
H04W16/26(2009.01)i, H04B7/155(2006.01)i, H04W88/06(2009.01)i, H04W88/10 (2009.01)i

According to International Patent Classification (IPC) or to both national classification and IPC

**B. FIELDS SEARCHED**

Minimum documentation searched (classification system followed by classification symbols)
H04B7/24-7/26, H04W4/00-99/00

Documentation searched other than minimum documentation to the extent that such documents are included in the fields searched
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 11-331063 A (Toshiba Corp.),<br>30 November, 1999 (30.11.99),<br>Claims 1, 2; Par. Nos. [0013] to [0053]; Figs. 2, 4, 5<br>(Family: none) | 1,4-7<br>2,3 |
| X<br>Y | JP 2007-59955 A (Fujitsu Ltd.),<br>08 March, 2007 (08.03.07),<br>Par. No. [0016]; Figs. 1, 2<br>& WO 2005/055625 A1 | 1,4-7<br>2,3 |
| X<br>Y | JP 2002-33698 A (Canon Inc.),<br>31 January, 2002 (31.01.02),<br>Fig. 1<br>& US 2002/0013151 A1    & EP 1175117 A2 | 1,4-7<br>2,3 |

| ☒ Further documents are listed in the continuation of Box C. | ☐ See patent family annex. |

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>24 August, 2009 (24.08.09) | Date of mailing of the international search report<br>01 September, 2009 (01.09.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2009/060241 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y | JP 2005-223711 A  (NEC Corp.),<br>18 August, 2005 (18.08.05),<br>Par. Nos. [0008], [0017]<br>(Family: none) | 2 |
| Y | WO 2006/051587 A1  (Fujitsu Ltd.),<br>18 May, 2006 (18.05.06),<br>Par. Nos. [0002], [0005]<br>& EP 1811793 A1 | 3 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007043690 A